# EUROPÄISCHE PATENTANMELDUNG

(11) **EP 1 493 977 A2**
(43) Veröffentlichungstag der Anmeldung: **05.01.2005**
(21) Anmeldenummer: 04013765.5
(22) Anmeldetag: 11.06.2004
(51) Int. Cl.: F24J 2/46

(54) **Einrichtung zur Kollektoroptimierung**

(30) Priorität: 17.06.2003 DE 10327187
(71) Anmelder: ROBERT BOSCH GMBH, 70442 Stuttgart (DE)
(72) Erfinder: Kroell, Ulrich, 72654 Neckartenzlingen (DE)

(57) **Zusammenfassung**

Die Erfindung betrifft eine Vorrichtung zur Stabilisierung des Betriebszustandes eines thermischen Sonnenkollektors, in dem ein Absorber zur Umwandlung von Sonnenenergie in Wärme durch einen Zwischenraum beabstandet hinter einer Abdeckung angeordnet ist.

Um sowohl bei regulären wie irregulären Betriebsbedingungen einen optimalen Wirkungsgrad zu erzielen, ist es erfindungsgemäß vorgesehen, dass mindestens ein Ventilelement am thermischen Sonnenkollektor vorgesehen ist, das den Zwischenraum von der Umgebung abschließt, wobei das Ventilelement (30) eine von der Luftfeuchtigkeit abhängige Öffnerfunktion oder als kombiniertes Ventilelement (40) eine von der Kollektortemperatur und von der Luftfeuchtigkeit abhängige Öffnerfunktion aufweist.

## Beschreibung

Vorrichtung zur Stabilisierung des Betriebszustandes eines thermischen Sonnenkollektors, in dem ein Absorber zur Umwandlung von Sonnenenergie in Wärme durch einen Zwischenraum beabstandet hinter einer Abdeckung angeordnet ist.

### Stand der Technik

Solche thermischen Sonnenkollektoren sind in einer Vielzahl von Ausführungen und Bauformen bekannt. Ihnen ist gemein, dass sie die Energie der auftreffenden Sonnen- und Himmelsstrahlung auf ein Wärmetransportmedium übertragen. Dazu wird ein Absorber benötigt, der die Strahlung absorbiert und in Wärmeenergie umwandelt.

Als Wärmetransportmedium werden häufig Flüssigkeiten, insbesondere Wasser, eingesetzt, welche zum Beispiel in Rohren oder Kanälen mit guter thermischer Ankopplung zum Absorber geleitet werden.

Zur Optimierung des Wirkungsgrades solcher thermischer Sonnenkollektoren können je nach Bedarf und Anwendungsgebiet eine Reihe von Maßnahmen getroffen werden. So kann die Oberfläche des Absorbers so beschaffen sein, dass sie als selektiver Strahler das Licht der Sonne gut absorbiert, Wärmestrahlung hingegen nur zu einem geringen Anteil emittiert. Auch eine gezielte Strukturierung der Absorberoberfläche sowie eine Wärmedämmung des Absorbers führen zu einer besseren Energieausbeute.

Eine weitere Maßnahme zur Verbesserung des Wirkungsgrades von thermischen Sonnenkollektoren ist die Reduzierung von konvektiven Verlusten. Diese sind stark abhängig von der Strömungsgeschwindigkeit des wärmeabführenden Mediums an der Absorberoberfläche. Um zu verhindern, dass strömende Luft Energie vom Absorber abführt, kann oberhalb des Absorbers eine Abdeckung angeordnet sein. Diese muss für die auftreffende Sonnen- und Himmelsstrahlung möglichst transparent sein. Für die Wärmestrahlung des Absorbers sollte sie hingegen undurchlässig sein und möglichst gute Wärmedämmeigenschaften aufweisen.

Geeignete Materialien für derartige Abdeckungen sind Glas, Kunststoffe in Form von Platten oder Folien und glasfaserverstärkte Kunststoffe.

Um bei abgedeckten Sonnenkollektoren Kondensationsbildung aufgrund hoher Luftfeuchtigkeit sowie eine Überhitzung des Kollektors zu verhindern, muss für eine ausreichende Belüftung des Kollektorinnenraumes gesorgt werden. Dazu weisen thermische Sonnenkollektoren oben eine Lufteintrittsöffnung zwischen Abdeckung und Kollektorplatte und auf der Unterseite eine Kondensat- und Luftaustrittsöffnung auf.

Nachteilig bei dieser Anordnung ist, dass diese Öffnungen immer offen sind. Dies führt auch bei regulären Betriebsbedingungen bei zulässiger Luftfeuchtigkeit und Temperatur aufgrund der ermöglichten Luftzirkulation zu einer Reduzierung des Wirkungsgrades.

Aus der DE 202 12 593 U1 ist eine Vorrichtung zur Reduktion der Stillstandstemperatur eines schräg auf oder in einem Dach montierten Sonnenkollektors oder eines Fassadenkollektors, welcher entweder aus einem in einem Gehäuse befindlichen Absorberblech, an diesen Absorberblechen befestigten Registerrohren, welche vom Wärmeträgermedium durchflossen werden, sowie Sammelrohren für die Zuleitung und die Ableitung des Wärmeträgermediums, oder einem anders aufgebauten Absorber und einer Glasabdeckung besteht, bekannt. Der Kollektor zeichnet sich dadurch aus, dass in der Gehäusewand, bevorzugt in ihrem oberen Bereich, mindestens eine, bevorzugt gegen Feuchtigkeitseintritt geschützte Öffnung vorgesehen ist, dass diese Öffnung durch eine Verschlusseinrichtung geschlossen ist und dass die Verschlusseinrichtung mit einem Temperaturfühler in Wirkverbindung steht, wobei der Temperaturfühler die Verstellung der Verschlusseinrichtung von der geschlossenen Stellung in die geöffnete Stellung und wieder zurück bewirkt.

Mit der beschriebenen Vorrichtung ist es möglich, bei zu hohen Temperaturen im Kollektor Öffnungen freizugeben, die eine Durchlüftung des Kollektorinnenraums und somit eine Abkühlung ermöglichen. Durch die genannte Schutzvorrichtung wird dabei verhindert, dass Feuchtigkeit von außen in den Kollektor eindringt.

Feuchtigkeit, welche sich auf Grund von Kondensation in dem Sonnenkollektor bildet, verbleibt bei dieser Vorrichtung jedoch im Sonnenkollektor. Sie kann erst abgeführt werden, wenn die Öffnungen auf Grund zu hoher Temperaturen im Kollektor geöffnet werden. Da Kondensation bei einer Reduzierung der Temperatur auftritt, bildet sich das Wasser bevorzugt dann, wenn die Öffnungen geschlossen sind.

Es ist Aufgabe der Erfindung, einen thermischen Sonnenkollektor der eingangs erwähnten Art zu schaffen, der sowohl bei regulären wie irregulären Betriebsbedingungen für einen optimalen Wirkungsgrad sorgt.

### Vorteile der Erfindung

Die Aufgabe wird mit den im Patentanspruch 1 angegebenen Merkmalen gelöst. Demgemäss ist vorgesehen, dass mindestens ein Ventilelement am thermischen Sonnenkollektor vorgesehen ist, das den Zwischenraum von der Umgebung abschließt, wobei das Ventilelement eine von der Luftfeuchtigkeit abhängige Öffnerfunktion oder als kombiniertes Ventilelement eine von der Luftfeuchtigkeit und von der Kollektortemperatur abhängige Öffnerfunktion aufweist.

Dadurch wird der Zwischenraum des thermischen Sonnenkollektors bei regulären Betriebsbedingungen vollständig abgeschlossen und eine Luftzirkulation im Zwischenraum verhindert, was zu einer Verbesserung des Wirkungsgrades führt. Bei Überschreiten einer zulässigen Luftfeuchtigkeit oder bei Kondensatbildung im Inneren des Kollektors wird das Ventil geöffnet und die Feuchtigkeit wird mit dem einsetzenden Luftstrom aus dem Kollektorinnenraum entfernt werden. Mit dem kombinierten Ventilelement kann zusätzlich die Temperatur im Inneren des Sonnenkollektors begrenzt werden, ohne dass zusätzliche Öffnungen vorgesehen werden müssen.

In einer bevorzugten Ausführungsform weist das Ventilelement einen Feuchtedehnstab und einen Ventildeckel auf, die miteinander in Wirkverbindung stehen und wobei der Feuchtedehnstab im Zwischenraum des thermischen Sonnenkollektors angeordnet ist. Diese Anordnung ermöglicht es, dass bei Überschreiten einer vorzugebenden Feuchtigkeit im Zwischenraum des thermischen Sonnenkollektors das Ventil ohne eine zusätzliche Hilfsenergie geöffnet wird.

Eine ausreichend große Ventilbewegung und Lebensdauer der Vorrichtung wird dadurch erreicht, dass der Feuchtedehnstab aus Kunststoff und/oder Naturstoff, vorzugsweise aus Hanf gebildet ist.

Nach einer weiteren Ausgestaltung der Erfindung ist es vorgesehen, dass das Ventilelement eine von der Temperatur des thermischen Sonnen kollektors abhängige Öffnerfunktion aufweist. Dadurch kann bei Überschreiten einer zulässigen Temperatur im Inneren des Kollektors das Ventil geöffnet werden und durch den einsetzenden Luftstrom ein Temperaturausgleich erfolgen.

Eine Überhitzung des thermischen Sonnenkollektors wird dadurch sicher vermieden, dass das Ventilelement oberhalb einer Temperatur von 150° C, vorzugsweise oberhalb 180° C öffnet.

Bevorzugt ist vorgesehen, dass das Ventilelement aus einer Bimetall-Schnappscheibe gebildet ist. Diese sind kostengünstig herzustellen, langlebig und können das Ventil ohne eine zusätzliche Hilfsenergie betätigen.

Die reproduzierbare Öffnung beziehungsweise Schließung des Ventils bei einer vorgegebenen Kollektortemperatur wird dadurch erreicht, dass das Ventilelement am Absorber, an der Kollektorwandung oder im Zwischenraum zwischen der Abdeckung und dem Absorber angeordnet ist.

Eine bevorzugte Ausgestaltung sieht vor, dass ein kombiniertes Ventilelement eine von der Kollektortemperatur und eine von der Luftfeuchtigkeit abhängige Öffnerfunktion aufweist. Diese Kombination ermöglicht es, mit nur einem Ventilelement sowohl bei zu hoher Temperatur als auch bei zu hoher Luftfeuchtigkeit die notwendige Luftzirkulation zu ermöglichen, was im Vergleich zu einer Lösung mit zwei getrennten Ventilen zu einem einfacheren und kostengünstigeren Aufbau führt.

Eine einfache und kostengünstige Anordnung wird dadurch erreicht, dass der Zwischenraum mit mindestens einem Ventilelement und mindestens einer permanenten Öffnung mit der Umgebung verbunden ist. Bei geschlossenem Ventilelement erfolgt über die permanente Öffnung nur eine geringe Luftzirkulation im Zwischenraum des Sonnenkollektors, da ein starker Luftzug erst bei zwei Öffnungen, möglichst am oberen und am unteren Ende des Kollektors erreicht wird.

Der beste Wirkungsgrad wird dadurch erreicht, dass mindestens ein Ventilelement zur Entlüftung und mindestens ein weiteres Ventilelement zur Belüftung des thermischen Sonnenkollektors vorgesehen ist, da hierbei im geschlossenen Zustand der Ventilelemente der Luftaustausch mit der Umgebung vollständig vermieden wird.

### Zeichnungen

Die Erfindung wird im Folgenden anhand eines in den Figuren dargestellten Ausführungsbeispiels näher erläutert. Es zeigen:
- Fig. 1: ein Ventilelement in der Schnittansicht
- Fig. 2: ein kombiniertes Ventilelement in der Schnittansicht

### Ausführungsbeispiel

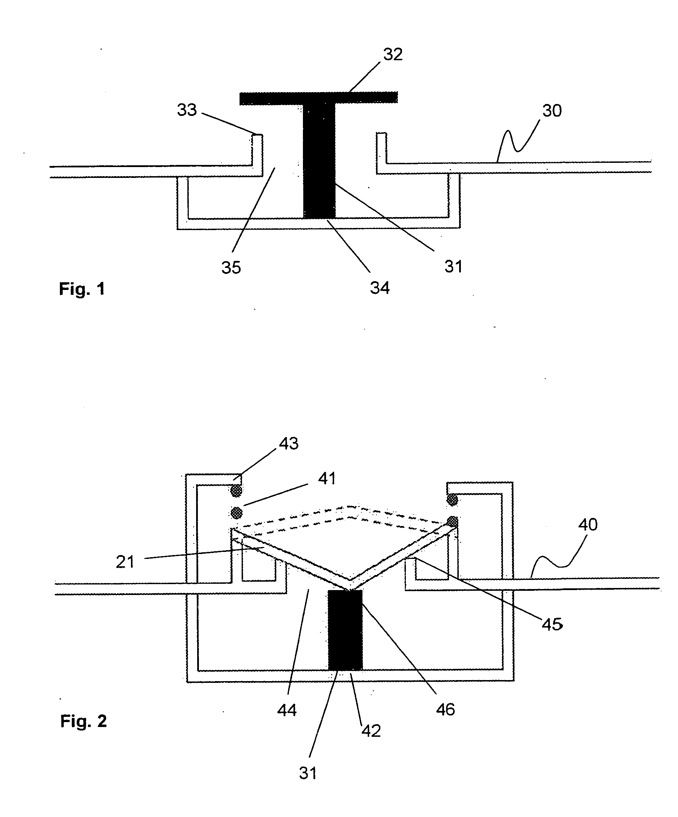

Die Fig. 1 zeigt ein Ventilelement 30 in der Schnittansicht. Zu erkennen ist ein Feuchtedehnstab 31, der mit einem Ventildeckel 32 in Wirkverbindung steht und sich über ein Auflager 34 am hier nicht dargestellten thermischen Sonnenkollektor abstützt. Ein solcher Feuchtedehnstab 31 kann vorzugsweise aus Kunststoff oder Naturstoff dargestellt werden. Es sind Konstruktionselemente bekannt, die sich hilfsenergiefrei bei Temperatur- oder Feuchtigkeitsänderung ausdehnen beziehungsweise zusammenziehen. Das Ventilelement 30 muss dabei im Zwischenraum zwischen der Abdeckung des Sonnenkollektors und dem Absorber angeordnet sein. Der Feuchtedehnstab 31 verstellt bei zunehmender Feuch tigkeit die Belüftungsöffnung 35 und lässt mehr oder weniger Luft zur Trocknung durch den thermischen Sonnenkollektor strömen. Bei trockener Atmosphäre im thermischen Sonnenkollektor schließt der Ventildeckel 32 über die Dichtfläche 33 ab. Damit sich das Ventilelement 30 auch ausreichend weit öffnet, kann zusätzlich eine hier nicht dargestellte Übersetzung den Stellweg des Ventilelementes 30 vergrößern. Die Ventilmechanik kann sich sowohl im thermischen Sonnenkollektor als auch außerhalb befinden.

Fig. 2 zeigt ein kombiniertes Ventilelement 40 in der Schnittansicht. Dabei ist je ein Ventilelement, das auf Temperatur reagiert mit einem auf Feuchtigkeit reagierenden Ventilelement miteinander kombiniert. Beide Ventilelemente können jeweils für sich oder auch gemeinsam die Belüftungsöffnung 44 beeinflussen. Steigt zum Beispiel die Feuchtigkeit im thermischen Sonnenkollektor an, so öffnet der Feuchtedehnstab 31 über sein Auflager 42 und dem Druckpunkt 46 das Verschlusselement 21 gegen die Federkraft der Feder 41. Die Feder 41 stützt sich dabei an der Federhalterung 43 ab und schließt das kombinierte Ventilelement 40 bei trockenem thermischen Sonnenkollektor über die Dichtfläche 45 dicht von der Umgebung ab. Bei Überschreitung einer maximal zulässigen Temperatur hingegen öffnet das Verschlusselement 21 unabhängig von der Feuchtigkeit ebenfalls die Belüftungsöffnung 44, so dass der thermische Sonnenkollektor durchlüftet wird.

## Patentansprüche

1. Vorrichtung zur Stabilisierung des Betriebszustandes eines thermischen Sonnenkollektors, in dem ein Absorber zur Umwandlung von Sonnenenergie in Wärme durch einen Zwischenraum beabstandet hinter einer Abdeckung angeordnet ist,
**dadurch gekennzeichnet,**
**dass** mindestens ein Ventilelement (30, 40) am thermischen Sonnenkollektor vorgesehen ist, das den Zwischenraum von der Umgebung abschließt, wobei das Ventilelement (30) eine von der Luftfeuchtigkeit abhängige Öffnerfunktion oder als kombiniertes Ventilelement (40) eine von der Luftfeuchtigkeit und von der Kollektortemperatur abhängige Öffnerfunktion aufweist.

2. Vorrichtung nach Anspruch 1,
**dadurch gekennzeichnet,**
**dass** das Ventilelement (30) einen Feuchtedehnstab (31) und einen Ventildeckel (32) aufweist, die miteinander in Wirkverbindung stehen und wobei der Feuchtedehnstab (31) im Zwischenraum angeordnet ist.

3. Vorrichtung nach Anspruch 1 oder 2,
**dadurch gekennzeichnet,**
**dass** der Feuchtedehnstab (31) aus Kunststoff oder Naturstoff, vorzugsweise aus Hanf gebildet ist.

4. Vorrichtung nach einem der Ansprüche 1 oder 2
**dadurch gekennzeichnet,**
**dass** das kombinierte Ventilelement (40) oberhalb einer Temperatur von 150°C, vorzugsweise oberhalb 180°C, öffnet.

5. Vorrichtung nach Anspruch 1 oder 2,
**dadurch gekennzeichnet,**
**dass** der Zwischenraum mit mindestens einem Ventilelement (30, 40) und mindestens einer permanenten Öffnung mit der Umgebung verbunden ist.
